Europäisches Patentamt

European Patent Office

Office européen des brevets

(19)

(11) Numéro de publication: **0 241 367**
**B1**

(12) **FASCICULE DE BREVET EUROPEEN**

(45) Date de publication du fascicule du brevet: **16.01.91**

(51) Int. Cl.⁵: **H 02 G 13/00**

(21) Numéro de dépôt: **87400758.6**

(22) Date de dépôt: **06.04.87**

(54) Paratonnerre à dispositif piezoélectronique d'amorcage de l'effet corona.

(30) Priorité: **11.04.86 FR 8605214**

(43) Date de publication de la demande:
**14.10.87 Bulletin 87/42**

(45) Mention de la délivrance du brevet:
**16.01.91 Bulletin 91/03**

(84) Etats contractants désignés:
**CH DE ES GB IT LI NL**

(56) Documents cités:
**EP-A-0 123 578**
**DE-B-1 089 440**
**FR-A-2 170 211**
**GB-A-2 106 330**

(73) Titulaire: **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur: **Robert, André**
**4 Bis, Avenue de Noailles**
**F-78320 Le Mesnil Saint Denis (FR)**
Inventeur: **Roubinet, Michel**
**10, rue Bréa**
**F-75006 Paris (FR)**
Inventeur: **Baumann, Jacques**
**7, rue des Grandes Vallées**
**F-91820 Boutigny sur Essonne (FR)**

(74) Mandataire: **Mongrédien, André et al**
**c/o BREVATOME 25, rue de Ponthieu**
**F-75008 Paris (FR)**

Courier Press, Leamington Spa, England.

## Description

La présente invention se rapporte au domaine des paratonnerres et plus précisément des paratonnerres comportant un dispositif piézoélectrique d'amorçage de l'effet Corona.

En période d'orage, le courant de foudre se construit en deux étapes. Dans une première ètape, un courant appelé "traceur descendant", constitué de particules chargées qui sont généralement des électrons, se dirige vers le sol. La direction générale de son mouvement est liée au champ électrique local. A l'approche de ce traceur, les objets au sol subissent un champ électrique intense qui provoque aux points les plus favorables l'apparition de décharges ascendantes appelées "traceurs ascendants". Lorsqu'un traceur ascendant rencontre un traceur descendant, ceci a pour effet de fermer un circuit électrique dans lequel s'écoule le courant de foudre. Celle-ci tombe donc à l'endroit capable d'émettre le traceur ascendant le plus prompt.

Comme les champs électriques intenses se forment de préférence au voisinage d'objets métalliques en forme de pointe, les paratonnerres se composent généralement d'une tige verticale terminée par une pointe métallique appelée "pointe captrice", cette tige étant en liaison électrique avec le sol. Ainsi, à l'approche du traceur descendant, la pointe du paratonnerre crée un champ électrique d'une intensité supérieure au champ électrique voisin. Elle est ainsi le lieu privilégié où prend naissance le traceur ascendant. L'efficacité du paratonnerre, c'est-à-dire l'étendue de la zone protégée, est d'autant plus grande que l'émission du traceur ascendant depuis la pointe est privilégiée par rapport à l'émission d'un traceur ascendant depuis un autre point.

Le traceur ascendant est consécutif à l'apparition de l'effet Corona qui consiste en une émission intense d'électrons à partir de la pointe du paratonnerre sous l'influence d'un champ électrique intense. Cependant, cette émission d'électrons a lieu avec un certain retard (quelques dizaines de microsecondes) après que le champ électrique a atteint la valeur nécessaire pour amorcer l'effet Corona. Ce retard peut être réduit si on augmente la population d'électrons libres au voisinage de la pointe, ce qui permet à l'effet Corona de prendre naissance à partir d'un électron appelé "électron germe" situé dans le voisinage de la pointe. Ceci permet de créer plus tôt un traceur ascendant qui rencontrera un traceur descendant à une altitude plus grande: on augmente ainsi la zone protégée par le paratonnerre.

Le document EP—A1—O 123 578 décrit un paratonnerre dans lequel on augmente la population d'électrons libres au voisinage de la pointe grâce à une électrode placée à proximité de la pointe et à un cristal piézoélectrique qui peut être mis en compression de différentes manières. Pour mettre le cristal en compression, on peut utiliser une pièce souple mise en mouvement sous l'action du vent, laquelle comporte un bossage qui appuie sur le cristal. On peut également utiliser une turbine mise en mouvement sous l'action du vent, laquelle comporte plusieurs bossages qui, au cours de leur rotation, viennent appuyer sur un ou plusieurs cristaux piézoélectriques dont chacun est relié à une électrode. On peut également utiliser un électroaimant pour exercer une pression sur le cristal piézoélectrique.

Si un tel dispositif permet effectivement d'augmenter la population d'électrons libres au voisinage de la pointe du paratonnerre, il présente néanmoins quelques inconvénients. Tout d'abord, il nécessite la présence de vents importants dans le cas où la compression du cristal est obtenue soit par une plaque métallique munie d'un bossage, soit par une turbine, et de tels dispositifs ne fonctionnent plus en absence de vent ou lorsque le vent est faible. D'autre part, dans la version où l'on utilise des électroaimants, il est nécessaire de faire appel à une source d'alimentation électrique extérieure et le dispositif ne fonctionne plus si cette dernière tombe en panne.

La présente invention a pour but de remédier à ces inconvénients en proposant un paratonnerre à amorçage piézoélectrique de l'effet Corona qui fonctionne même en cas de vent très faible et quine nécessite pas de faire appel à des appareils extérieurs.

Le paratonnerre objet de l'invention comporte, de manière connue,
une hampe sensiblement verticale,
une pointe captrice située à la partie supérieure de la hampe et en liaison électrique avec le sol,
au moins une électrode placée au voisinage de la pointe captrice,
au moins un cristal piézoélectrique en liaison électrique avec ladite électrode, et
des moyens de mise en compression du cristal piézoélectrique.

L'invention est caractériseé en ce que les moyens de mise en compression du cristal piézoélectrique comprennent:
un support fixe sur lequel la hampe est montée de manière à pouvoir pivoter autour d'au moins un axe horizontal,
une pièce d'appui par l'intermédiaire de laquelle la hampe repose sur le support, cette pièce d'appui exerçant une force de réaction au moins dans certaines positions de la hampe, et
des moyens pour transmettre cette force de réaction au cristal.

Le paratonnerre comporte en outre des moyens pour limiter le pivotement de la hampe.

De préférence, la pièce d'appui est une pièce de forme convexe et peut être constituée soit par une excroissance prévue sur la hampe ou le support fixe, soit par une bille interposée entre la hampe et le support fixe.

Dans certaines variantes de réalisation, elle est en contact direct avec le cristal et constitue elle-même les moyens de transmission de la force de réaction. Dans d'autres variantes, les moyens pour transmettre la force de réaction au cristal comprennent une pièce rigide en contact direct d'une part avec la pièce d'appui, et d'autre part avec le cristal.

A l'équilibre, la hampe est verticale et repose sur le support par l'intermédiaire de la pièce d'appui. Cette dernière exerce une réaction égale au poids de la hampe et cette réaction est transmise au cristal, lequel est ainsi mis en compression. Cependant, il s'agit d'un équilibre instable et la hampe a tendance à quitter la position verticale sous l'action de très faibles sollicitations, donc en particulier sous l'effet du vent, même lorsque celui-ci est faible. Comme on le verra plus loin, dans certains modes de réalisation, la pièce d'appui n'est en contact direct ou indirect avec le cristal que lorsque la hampe est en position verticale. Dans d'autres modes de réalisation, la pièce d'appui est en permanence en contact avec le cristal jusqu'à ce qu'au cours de son mouvement de pivotement, la hampe arrive en butée contre un élément prévu sur le support. Dans ce cas, le vent continuant à exercer un effort sur la hampe, ceci entraîne un effort important sur la butée et un effort important exercé par la hampe sur la pièce d'appui (principe du "pied de biche"). La pièce d'appui exerce alors une réaction soit sur la hampe, soit sur le support, et cette réaction est transmise au cristal, provoquant la compression de celui-ci.

De préférence, le cristal est placé à la partie inférieure de la hampe.

Selon un autre aspect de l'invention, les moyens pour limiter le pivotement de la hampe comprennent:

une collerette faisant partie du support et présentant une face inférieure servant de butée,

une pièce, prévue à la partie inférieure de la hampe et dont au moins une partie entoure la collerette, cette pièce comportant un épaulement situé à une distance $d$ de la butée lorsque la hampe est verticale, et dont au moins une partie peut venir en contact avec la butée au cours du pivotement de la hampe.

Dans un mode de réalisation particulier, la collerette est de forme sensiblement polygonale afin que la hampe pivote dans un plan et ne décrive pas un cône. Dans ce cas, la collerette peut présenter une face supérieure munie d'au moins un trou dans lequel peut venir un pion prévu à la partie inférieure de la hampe: le pion empêche ainsi la hampe de tourner sur ellemême (c'est-à-dire autour de son axe longitudinal). Cependant, si le pion sort du trou et si la hampe se met à décrire un cône, les côtés plats de la collerette transforment ce mouvement continu en chocs successifs qui permettent la mise en compression des cristaux piézoélectriques.

Selon une autre caractéristique du paratonnerre objet de l'invention, celui-ci peut comporter un câble haute tension dont au moins une partie se trouve à l'intérieur de la hampe, ce câble étant en liaison électrique d'une part avec le cristal et d'autre part avec ladite électrode.

Enfin, selon un dernier aspect de l'invention, l'électrode se trouve à l'intérieur d'un boîtier en matériau conducteur de l'électricité et la partie supérieure de ce boîtier est en forme de pointe, constituant ainsi la pointe captrice. Dans ce cas, il est avantageux de prévoir au moins un orifice à la partie inférieure du boîtier et un orifice à la partie supérieure de celui-ci: cette disposition facilite la circulation de l'air de bas en haut et favorise le transfert des particules chargées créées au voisinage de l'électrode vers la partie supérieure du boîtier, c'est-à-dire vers la pointe captrice.

L'invention apparaîtra mieux à la lecture de la description qui va suivre, donnée à titre purement illustratif et nullement limitatif, en référence aux dessins annexés, dans lesquels:

la figure 1 est une vue schématique en élévation de l'ensemble d'un paratonnerre conforme à l'invention,

la figure 2 est une vue schématique en coupe verticale à échelle agrandie montrant comment la hampe est montée sur le support fixe dans une première variante de réalisation,

les figures 3a et 3b sont des schémas de principe illustrant le fonctionnement du paratonnerre objet de l'invention dans le mode de réalisation de la figure 2,

les figures 4a à 4g illustrent le fonctionnement du paratonnerre objet de l'invention dans une autre variante de réalisation,

la figure 5 est une vue schématique en coupe selon la ligne V-V de la figure 2 lorsque la collerette du support fixe est de forme polygonale, et

la figure 6 est une vue schématique en coupe verticale à échelle agrandie de la partie supérieure du paratonnerre de la figure 1.

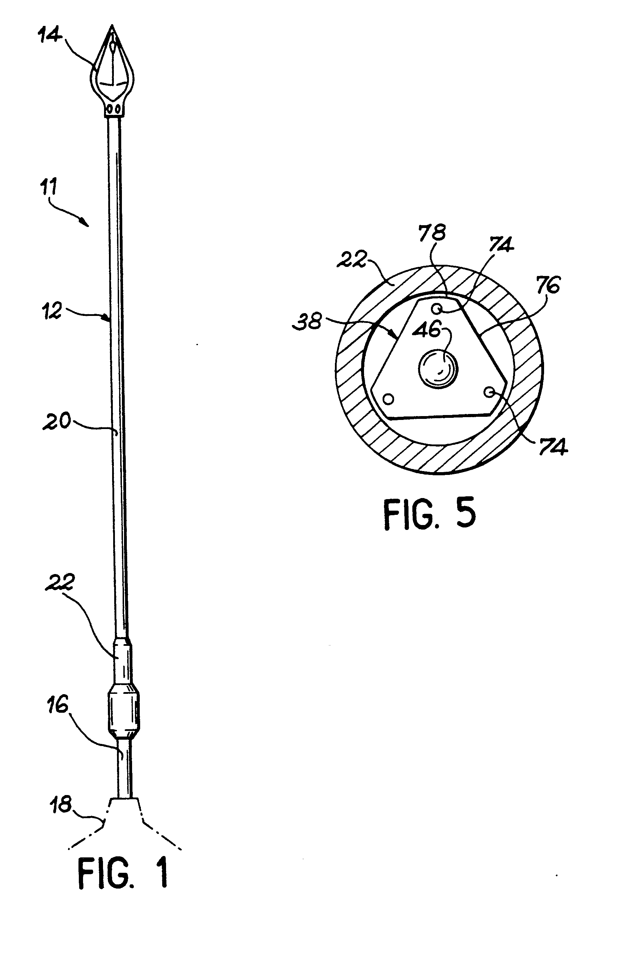

Si l'on se reporte à la figure 1, on voit que le paratonnerre objet de l'invention, portant la référence générale 11, se compose d'une hampe 12 sensiblement verticale se terminant à sa partie supérieure par un boîtier 14 constituant la pointe captrice. Cette pointe captrice sera décrite plus en détail cidessous en référence à la figure 6.

Selon l'invention, la hampe 12 est montée oscillante sur un support 16, lui-même fixé dans le sol 18. Le mouvement d'oscillation ou de pivotement ainsi permis est un mouvement de rotation autour d'un axe horizontal, généralement un axe passant par la partie inférieure de la hampe. Dans le cas particulier décrit ici, la hampe 12 se compose d'un tube rigide 20 à la partie inférieure duquel est montée une pièce de liaison 22. C'est par l'intermédiaire de cette dernière que la hampe 12 est montée sur le support 16.

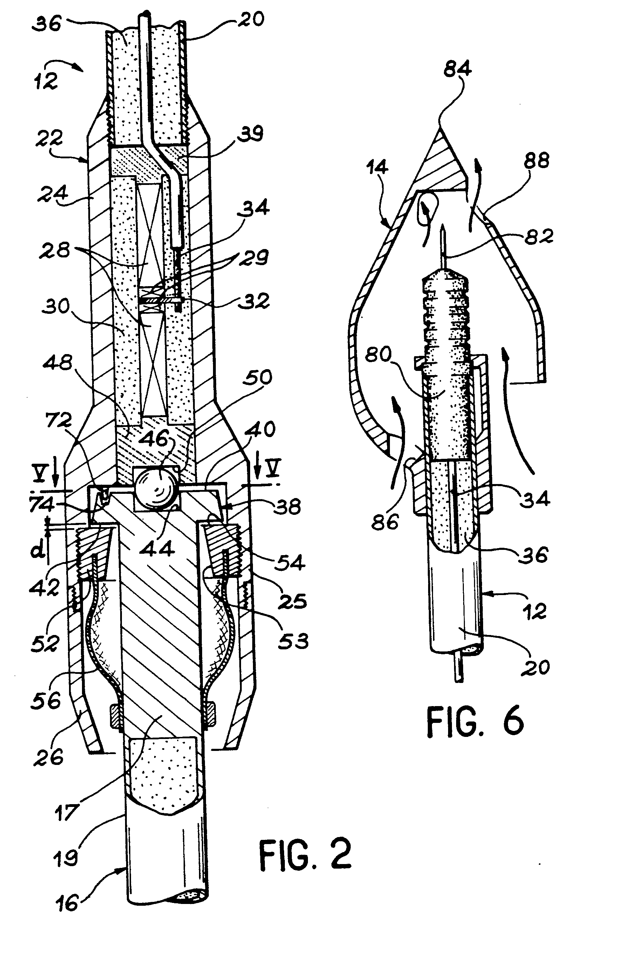

La vue en coupe de la figure 2 montre plus en détail le montage de la hampe 12 sur le support 16. On voit que la pièce de liaison 22 comporte une partie supérieure 24 de forme sensiblement cylindrique et une partie inférieure 25 également de forme sensiblement cylindrique et entourant le support 16. Le tube 20 comporte à sa partie inférieure un filetage externe qui permet de le visser dans un trou taraudé prévu dans la partie supérieure 24 de la pièce 22, mais on ne sortirait pas du cadre de l'invention en utilisant d'autres moyens de montage. L'intérieur de la partie 24 de la pièce 22 est creux et contient deux cristaux piézoélectriques 28 séparés des parois de la partie 24 de la pièce 22 par une masse d'isolant 30. Les deux cristaux 28 sont en contact électrique avec une plaque métallique 32, par l'intermédiaire de prises de potentiel 29. A la plaque 32 est fixée l'extrémité d'un câble 34. Ce câble, pouvant porter de la haute tension, passe à l'intérieur du tube 20 sensiblement suivant l'axe de celui-ci et peut être séparé de la paroi interne du tube 20 par un moyen de centrage 36. Ce câble 34 permet de relier électriquement les cristaux piézoélectriques 28 à l'électrode placée à la partie supérieure de la hampe, comme cela sera expliqué ci-dessous dans la suite de la présente description.

On voit encore sur la figure 2 que le support 16 a sensiblement la forme d'un cylindre d'axe vertical et se termine à sa partie supérieure par une collerette 38 ayant une face, supérieure 40 sensiblement plane et horizontale et une face inférieure 42 qui est, elle aussi, sensiblement plane et horizontale. Au centre de la face supérieure 40 de la collerette 38 se trouve un évidement 44 dans lequel est placée une bille 46. A l'intérieur de la partie supérieure 24 de la pièce de liaison 22 est montée une pièce rigide 48, laquelle est en contact direct avec l'un des cristaux piézoélectriques 28. Cette pièce 48 comporte à sa partie inférieure un évidement 50 sensiblement de même forme et de mêmes dimensions que l'évidement 40 de la collerette 38 et c'est par l'intermédiaire de la pièce 48 reposant sur la bille 46 que la hampe repose sur le support 16. Une pièce de forme sensiblement cylindrique 52 est vissée à l'intérieur de la partie basse 25 de la pièce 22 et comporte à sa partie supérieure une face d'appui 54 sensiblement plane et horizontale qui se trouve à une distance *d* de la face inférieure 42 de la collerette 38. La pièce 52 comporte en son centre un trou 53 permettant le passage de la partie supérieure 17 du support 16. Dans l'exemple décrit ici, cette dernière, qui se termine par la collerette 38, est une masse cylindrique pleine alors que la partie inférieure du support 16 est un tube 19, mais on ne sortirait pas du cadre de l'invention en utilisant d'autres dispositions.

Le paratonnerre comporte en outre une tresse 56, entourant la partie supérieure 17 du support 16, dont une extrémité est fixée à l'intérieur de la pièce 52 et en contact électrique avec cette dernière, tandis que son autre extrémité est fixée sur le support 16 de manière à être en contact électrique avec celui-ci. Le tube 20, la pièce de liaison 22, la pièce 52 et au moins la paroi externe du support 16 sont réalisés en matériaux conducteurs de l'électricité, généralement un métal. Ainsi, la liaison électrique entre la pointe captrice située au sommet de la hampe et le sol est assurée par le tube 20, la pièce 22, la pièce 52, la tresse 56 et le support 16. Eventuellement, on peut prévoir un capot de protection 26, ayant sensiblement la forme d'un manchon cylindrique vissé sur la partie inférieure 25 de la pièce 22, afin de protéger la tresse 56.

Le fonctionnement du dispositif illustré aux figures 1 et 2 est le suivant.

On voit sur la figure 2 que, dans la position d'équilibre, la hampe est verticale et repose sur le support 16 par l'intermédiaire de la pièce 48 qui s'appuie sur la bille 46. Sous l'effet du vent ou d'une sollicitation quelconque, la hampe se met à pivoter autour d'un axe horizontal, par exemple un axe perpendiculaire au plan de la figure. Dans ce cas, la hampe oscille dans le plan de la figure jusqu'à ce que la face supérieure 54 de la pièce 52 vienne en butée contre la face inférieure 42 de la collerette 38. Le vent continuant à exercer un effort sur la hampe, ceci augmente le couple de rotation exercée sur cette dernière. Cependant, comme elle ne peut pas continuer son mouvement du fait que la pièce 52 est en butée contre la face 42 de la collerette 38, ceci a pour effet que la hampe exerce une action importante sur la bille 46 par l'intermédiaire de la pièce 48. Il s'ensuit une réaction transmise du support 16 à la pièce 48 par l'intermédiaire de la bille 46, et de la pièce 48 aux cristaux piézoélectriques 28. Ces derniers sont immobilisés à l'intérieur de la pièce 22 par une butée 39 prévue à la partie supérieure de celle-ci, immédiatement en-dessous du tube 20. Comme ils ne peuvent coulisser suivant l'axe longitudinal de la pièce 22, ils sont mis en compression. Ils sont alors le siège d'un potentiel électrique qui est transmis à l'électrode située à la partie supérieure de la hampe par l'intermédiaire du câble 34.

Il est à remarquer que, dans le mode de réalisation illustré à la figure 2, les cristaux piézoélectriques 28 sont constamment en compression même lorsque la hampe n'est pas en butée et se trouve en position neutre (position verticale) ou au voisinage de celle-ci. En effet, la disposition des différents éléments est telle que la pièce 48 est constamment en contact avec la bille 46 et il y a toujours une force de réaction due au poids de la hampe.

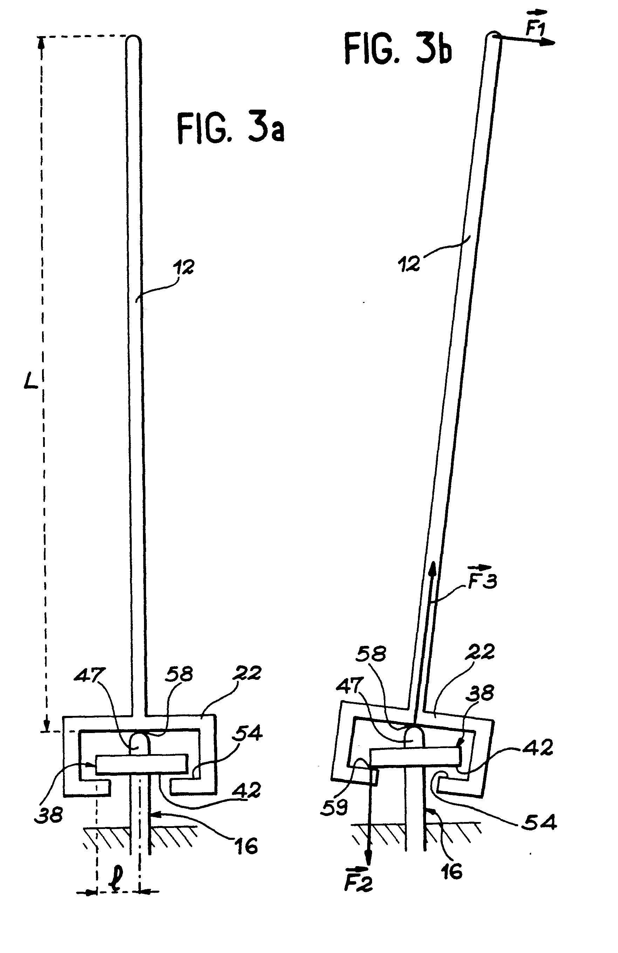

Le principe de fonctionnement du paratonnerre illustré à la figure 2 va maintenant être décrit de manière plus détaillée en référence aux figures 3a et 3b. Sur ces figures, on a représenté de manière très schématique la hampe 12 avec, à sa partie inférieure, la pièce 22 par l'intermédiaire de laquelle elle repose sur le support 16. Celui-ci porte la collerette 38 qui a une face inférieure 42. On voit également sur les figures 3a et 3b que la pièce 22 présente à sa partie inférieure une surface plane référencée 54 car elle joue le même rôle que la face supérieure 54 de la pièce 52 de la figure 2. L'extrémité supérieure 47 du support 16 est de forme convexe et joue le même rôle que la bille 46 (en effet, la pièce d'appui peut être une bille ou une excroissance prévue soit sur le support, soit à la partie inférieure de la hampe). Le point de contact entre la hampe 12 et la partie supérieure 47 du support 16 est désigné par 58 et la hampe est mobile en rotation autour de tous les axes horizontaux passant par le point 58. On désigne par L la longueur de la hampe depuis son sommet jusqu'à l'axe de rotation et par l la distance entre l'axe du support 16 et le bord de la collerette 38 (la hampe 12 et le support 16 sont de préférence réalisés de telle sorte qu'ils présentent un axe de symétrie de révolution).

Le fonctionnement de ce paratonnerre est le suivant:

La figure 3a représente l'ensemble en position d'équilibre, c'est-à-dire avec la hampe verticale. Sous l'action d'une sollicitation quelconque, la hampe se met à osciller autour d'un axe horizontal, par exemple un axe perpendiculaire au plan de la figure et passant par le point 58. La hampe arrive ainsi à la position de la figure 3b, où elle est inclinée vers la droite en regardant la figure, tandis que la face 54 de la pièce 22 est en contact avec la face inférieure 42 de la collerette 38 au point 59. Le mouvement de la hampe est ainsi bloqué et, si elle continue à être soumise à la même sollicitation (par exemple l'action du vent), elle est soumise à un couple de rotation qui peut être assimilé à une force Fl appliquée à sa partie supérieure. Il s'ensuit une force de réaction F2 exercée par la collerette 38 sur la face 54 au point 59 et une force de réaction F3 exercée par la partie supérieure 47 du support 16 sur la hampe 12. L'intensité de la force F3 est définie par la formule:

$$F3 = \rho \frac{L}{l} \times F1$$

ρ étant le rendement mécanique du système.

La distance L étant très supérieure à la distance 1, la force F3 est très supérieure à la force F1. C'est la force F3 qui est transmise aux cristaux piézoélectriques (par l'intermédiaire de la pièce 48 dans le mode de réalisation de la figure 2) et, comme ces cristaux sont immobilisés à l'intérieur de la hampe, ils sont soumis à une compression. Ils sont le siège d'une haute tension qui est transmise à l'électrode située à la partie supérieure de la hampe.

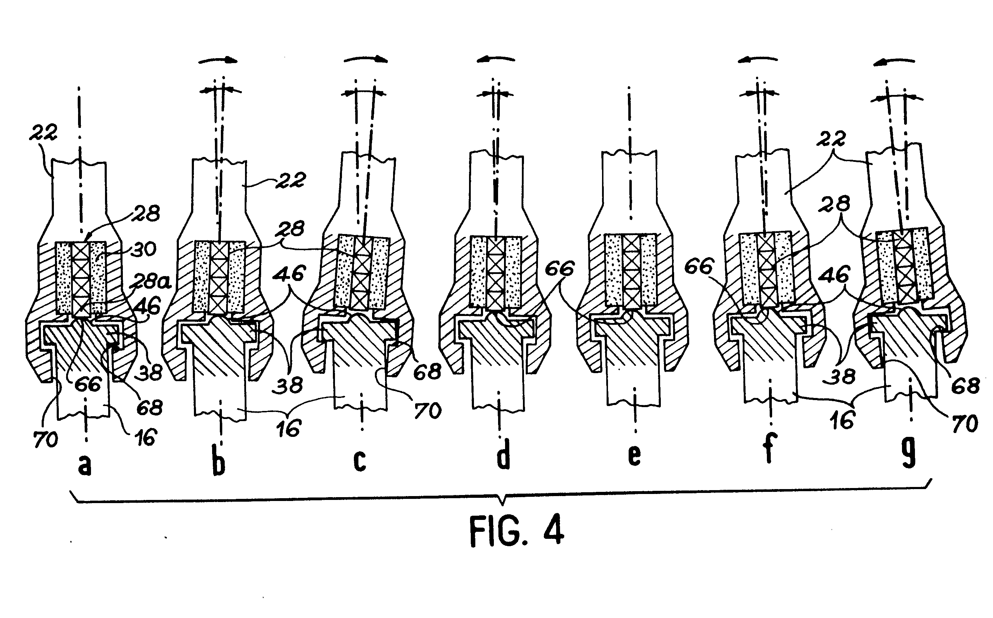

Les figures 4a à 4g illustrent le fonctionnement du dispositif dans un mode de réalisation différent.

Sur la figure 4a, on retrouve la pièce de liaison 22 contenant un empilement de cristaux piézoélectriques 28 maintenus par un isolant 30 à l'intérieur de la pièce 22. Cependant, la bille 46 est remplacée par une excroissance 66 prévue sensiblement au centre de la collerette 38 du support 16. Le cristal piézoélectrique 28a se trouvant à l'extrémité inférieure de l'empilement repose directement sur le bossage 66 lorsque le dispositif est en équilibre (c'est-à-dire lorsque la hampe est verticale). La partie inférieure de la pièce 22 présente un épaulement 68 pouvant venir en butée contre la face inférieure de la collerette 38. La pièce 22 comporte à sa partie inférieure un trou cylindrique 70 entourant le support 16 en dessous de la collerette 38.

Lorsque le vent souffle, par exemple de la gauche vers la droite en regardant la figure 4a, la hampe se met à osciller dans le plan de la figure autour d'un axe perpendiculaire au plan de celle-ci. Au début de ce mouvement (figure 4b), le cristal inférieur 28a reste en contact avec le bossage 66 de la collerette 38. Le mouvement continuant dans la même direction, on arrive à la position de la figure 4c où l'épaulement 68 de la pièce 22 est en butée contre la face inférieure de la collerette 38 en un point tandis que, dans une position diamétralement opposée, la paroi du trou 70 est en contact avec la partie supérieure du support 16. Il est à noter que la contrainte exercée sur les céramiques piézoélectriques diminue progressivement au cours de ce mouvement jusqu'à ce que le cristal 28a ne soit plus en contact avec le bossage 66. Le mouvement est limité par le contact de la paroi du trou 70 sur le support 16 et de l'épaulement 68 sur la face inférieure de la collerette 38. Lorsqu'on arrive à la position de la figure 4c, par élasticité, l'ensemble repart vers la gauche en regardant la figure et repasse par les positions des figures 4d et 4e qui sont les mêmes que celles des figures 4b et 4a respectivement. Le mouvement continue vers la gauche et l'on passe par les positions des figures 4f et 4g qui sont semblables à celles des figures 4b et 4c respectivement, la hampe étant cette fois inclinée vers la gauche et non plus vers la droite.

Si l'on se reporte à nouveau à la figure 2, on voit qu'on a prévu un pion 72 sur la pièce de liaison 22, lequel peut pénétrer dans des trous tels que 74 prévus dans la face supérieure 40 de la collerette 38. Le rôle du pion 72 et du trou 74 vont être maintenant décrits en référence aux figures 2 et 5. On voit sur la vue en coupe de la figure 5 que la collerette 38 peut être de forme sensiblement polygonale, et avoir par exemple la forme d'un triangle. Celui-ci est constitué par des faces planes 76 reliées par des parties courbes 78. C'est aux sommets du triangle, c'est-à-dire au voisinage des parties courbes 78, que se trouvent les trous 74. Si l'on se reporte à la figure 2, on voit que, si le vent pousse la hampe de la droite vers la gauche en regardant la figure, le pion 72 pénètre dans le trou 74. Il empêche ainsi la hampe de tourner sur elle-même, c'est-àdire autour de son propre axe longitudinal. Cependant, les dimensions relatives du pion 72 et du trou 74 sont telles que le mouvement d'oscillation n'est pas gêné ou arrêté avant que la pièce 52 ne vienne en butée contre la face inférieure de la collerette 38.

Il se peut également que la hampe, pour une raison quelconque, quitte une position de butée et se mette à tourner autour de sa position neutre, c'est-à-dire décrive un cône au lieu d'osciller dans un plan. Dans ce cas, la forme de la collerette fait que le mouvement n'est pas continu et que la pièce 22 subit des chocs successifs contre la collerette 38. Ces chocs permettent de solliciter en compression les céramiques piézoélectriques et celles-ci continuent à jouer leur rôle.

La vue en coupe de la figure 6 illustre de manière plus détaillée la partie supérieure de la hampe 12 où se trouve le boîtier 14 constituant la pointe captrice.

On retrouve sur cette figure le tube 20 à l'intérieur duquel se trouve le câble haute tension 34 maintenu par le moyen de centrage 36. Un support 80 est monté à la partie supérieure du tube 20 et il porte à son extrémité supérieure une tige métallique pointue 82 constituant l'électrode, cette dernière étant en contact électrique avec le câble 34. Le boîtier 14 est creux et forme un logement qui contient la partie supérieure du tube 20, le support 80 et la tige 82. A sa partie supérieure, le boîtier 14 se termine en forme de pointe et constitue la pointe captrice 84 du paratonnerre. A sa partie inférieure, le boîtier 14 est en contact électrique avec le tube 20. Comme il est réalisé en matériau conducteur de l'électricité, la pointe 84 est en liaison électrique avec le sol par l'intermédiaire du tube 20 comme cela a été indiqué plus haut. On voit encore sur la figure 6 que le boîtier 14 comporte à sa partie inférieure des ouvertures telles que 86 et à sa partie supérieure des ouvertures telles que 88. Ces dernières permettent une circulation d'air de bas en haut, c'est-à-dire des orifices 86 jusqu'aux orifices 88, comme cela est indiqué par les flèches sur la figure 6. Cette circulation d'air a pour effet de faciliter le transfert des électrons produits au niveau de l'électrode 82 jusqu'à la pointe captrice 84.

Le paratonnerre objet de l'invention présente des avantages particulièrement intéressants puisqu'il fonctionne seul, sans l'aide d'appareillages extérieurs. Il suffit d'un vent très faible ou d'une faible sollicitation pour que la hampe se mette à osciller. On peut remarquer que la position d'équilibre dans laquelle la hampe est exactement verticale correspond à un équilibre instable. C'est pourquoi une sollicitation quelconque, même très faible et en l'absence de vent, entraîne le mouvement d'oscillation de la hampe et, par conséquent, ce paratonnerre est pratiquement en permanence en fonctionnement. En effet, il est pratiquement impossible que la hampe reste constamment en position verticale. Comme il s'agit d'un équilibre instable, elle peut quitter cette position d'équilibre sous l'effet de sollicitations très faibles et arriver en une position de butée où les céramiques sont en compression. Elle peut éventuellement rester un certain temps dans cette position mais, du fait de l'élasticité du dispositif, elle peut repartir en sens inverse et repasser par la position d'équilibre avant d'atteindre une nouvelle position de butée. Ceci est particulièrement intéressant pour la variante illustrée aux figures 4a à 4g dans laquelle les cristaux piézoélectriques ne sont en compression qu'au voisinage de la position verticale. Enfin, dans la variante illustrée à la figure 5 où la collerette est de forme sensiblement polygonale, le système fonctionne même si la hampe part en rotation autour de sa position d'équilibre, c'est-à-dire décrit un cône au lieu d'osciller dans un plan.

Il est bien entendu que l'invention ne se limite pas aux seuls exemples qui viennent d'être décrits et que l'homme du métier pourra faire varier, en fonction de chaque cas particulier, le nombre et la disposition des cristaux piézoélectriques, leurs moyens de maintien à l'intérieur du dispositif, ou la forme et l'emplacement de la pièce d'appui. Enfin, si l'invention s'applique essentiellement aux paratonnerres, elle peut également être utilisée pour d'autres cas où l'on désire créer une haute tension par mise en compression de cristaux piézoélectriques.

## Revendications

1. Paratonnerre comprenant:
une hampe (12) sensiblement verticale,
une pointe captrice (84) située à la partie supérieure de la hampe (12) et en liaison électrique avec le sol,
au moins une électrode (82) placée au voisinage de la pointe captrice (84), au moins un cristal piézoélectrique (28) en liaison électrique avec ladite électrode (82), et
des moyens de mise en compression du cristal piézoélectrique (28),
caractérisé en ce que lesdits moyens de mise en compression comprennent:
un support fixe (16) sur lequel la hampe (12) est montée de manière à pouvoir pivoter autour d'au moins un axe horizontal,
une pièce d'appui (46) par l'intermédiaire de laquelle la hampe (12) repose sur le support (16), cette pièce d'appui (46) exerçant une force de réaction au moins dans certaines positions de la hampe (12), et
des moyens (48) pour transmettre cette force de réaction au cristal (28),
le paratonnerre comportant en outre des moyens (52, 38) pour limiter le mouvement de pivotement de la hampe (12).

2. Paratonnerre selon la revendication 1, caractérisé en ce que la pièce d'appui est une pièce de forme convexe.

3. Paratonnerre selon la revendication 2, caractérisé en ce que la pièce d'appui est une excroissance prévue sur la hampe (12).

4. Paratonnerre selon la revendication 2, caractérisé en ce que la pièce d'appui est une excroissance (66) prévue sur le support fixe (16).

5. Paratonnerre selon la revendication 2, caractérisé en ce que la pièce d'appui est une bille (46) interposée entre la hampe (12) et le support fixe (16).

6. Paratonnerre selon l'une quelconque des revendications 1 à 5, caractérisé en ce que la pièce d'appui est en contact direct avec le cristal (28), constituant elle-même les moyens de transmission de la force de réaction.

7. Paratonnerre selon l'une quelconque des revendications 1 à 5, caractérisé en ce que lesdits moyens pour transmettre la force de réaction au cristal (28) comprennent une pièce rigide (48) en contact direct d'une part avec la pièce d'appui (46) et d'autre part avec le cristal (28).

8. Paratonnerre selon l'une quelconque des revendications 1 à 7, caractérisé en ce que le cristal (28) est placé à la partie inférieure de la hampe (12).

9. Paratonnerre selon l'une quelconque des revendications 1 à 8, caractérisé en ce que les moyens pour limiter le mouvement de pivotement de la hampe (12) comprennent:
une collerette (38) faisant partie du support (16) et présentant une face inférieure (42) servant de butée,

une pièce (25) prévue à la partie inférieure de la hampe (12) et dont au moins une partie entoure la collerette (38), cette pièce (25) comportant un épaulement (54) situé à une distance d de la butée (42) lorsque la hampe (12) est verticale et dont au moins une partie peut venir en contact avec la butée au cours du pivotement de la hampe (12).

10. Paratonnerre selon la revendication 9, caractérisé en ce que la collerette (38) est de forme polygonale.

11. Paratonnerre selon la revendication 10, caractérisé en ce que la collerette (38) a une face supérieure (40) comportant au moins un trou (74) dans lequel peut venir un pion (72) monté à la partie inférieure de la hampe (12).

12. Paratonnerre selon l'une quelconque des revendications 1 à 11, caractérisé en ce qu'il comporte un câble haute tension (34) dont au moins une partie est à l'intérieur de la hampe (12), ce câble (34) étant en liaison électrique d'une part avec le cristal (28) et d'autre part avec ladite électrode (82).

13. Paratonnerre selon l'une quelconque des revendications 1 à 12, caractérisé en ce que ladite électrode (82) se trouve à l'intérieur d'un boîtier (14) en matériau conducteur de l'électricité dont la partie supérieure se termine en pointe, constituant ainsi la pointe captrice (84).

14. Paratonnerre selon la revendication 13, caractérisé en ce que le boîtier (14) comporte au moins un orifice (86) à sa partie inférieure et au moins un orifice (88) à sa partie supérieure.

**Patentansprüche**

1. Blitzableiter mit:
einem im wesentlichen vertikalen Schaft (12),
einem Einschlagpunkt (84) im oberen Bereich des Schafts (12) und in Verbindung mit dem Boden,
wenigstens einer Elektrode (82) in der Nähe des Einschlagpunktes (84),
wenigstens einem piezoelektrischen Kristall (28) in elektrischer Verbindung mit der Elektrode (82), und
einer Vorrichtung zur Kompression des piezoelektrischen Kristalls (28),
dadurch gekennzeichnet, daß die Kompressionsvorrichtung umfaßt:
einen festen Träger (16), auf den der Schaft (12) so montiert ist, daß er sich um wenigstens eine horizontale Achse drehen kann,
ein Stützelement (46), über das der Schaft (12) auf dem Träger (16) aufliegt, wobei dieses Stützelement (46) eine Reaktionskraft in wenigstens bestimmten Stellungen des Schafts (12) ausübt, und
eine Vorrichtung (48) zum Übertragen dieser Reaktionskraft auf den Kristall (28),
wobei der Blitzableiter außerdem eine Vorrichtung (52, 38) zum Begrenzen der Drehbewegung des Schafts (12) umfaßt.

2. Blitzableiter nach Anspruch 1, dadurch gekennzeichnet, daß das Stützelement ein Element konvexer Form ist.

3. Blitzableiter nach Anspruch 2, dadurch gekennzeichnet, daß das Stützelement eine auf dem Schaft (12) vorgesehene Ausstülpung ist.

4. Blitzableiter nach Anspruch 2, dadurch gekennzeichnet, daß das Stützelement eine auf dem festen Träger (16) vorgesehene Ausstülpung ist.

5. Blitzableiter nach Anspruch 2, dadurch gekennzeichnet, daß das Stützelement eine Kugel (46) zwischen dem Schaft (12) und dem festen Träger (16) ist.

6. Blitzableiter nach einem der Ansprüche 1 bis 5, dadurch gekennzeichnet, daß das Stützelement in direktem Kontakt mit dem Kristall (28) steht und selbst die Übertragungsvorrichtung für die Reaktionskraft bildet.

7. Blitzableiter nach einem der Ansprüche 1 bis 5, dadurch gekennzeichnet, daß die Übertragungsvorrichtung für die Reaktionskraft auf den Kristall (28) ein steifes Element (48) in direktem Kontakt mit einerseits dem Stützelement (46) und andererseits dem Kristall (28) umfaßt.

8. Blitzableiter nach einem der Ansprüche 1 bis 7, dadurch gekennzeichnet, daß der Kristall (28) im unteren Bereich des Schafts (12) angeordnet ist.

9. Blitzableiter nach einem der Ansprüche 1 bis 8, dadurch gekennzeichnet, daß die Vorrichtung zum Begrenzen der Drehbewegung des Schafts (12) umfaßt:
einen Kragen (38), der Bestandteil des Trägers (16) ist und eine Unterseite (42) aufweist, die als Anschlag dient,
ein im unteren Bereich des Schafts (12) vorgesehenes Element (25), von dem wenigstens ein Teil den Kragen (38) umgibt, wobei dieses Element (25) eine Schulter (54) in einem Abstand a vom Anschlag (42) aufweist, wenn der Schaft (12) vertikal ist, und von der wenigstens ein Teil im Verlaufe der Drehbewegung des Schafts (12) mit dem Anschlag in Kontakt kommen kann.

10. Blitzableiter nach Anspruch 9, dadurch gekennzeichnet, daß der Kragen (38) eine Polygonform besitzt.

11. Blitzableiter nach Anspruch 10, dadurch gekennzeichnet, daß der Kragen (38) eine obere Seite (40) mit wenigstens einem Loch (74) besitzt, durch das ein im unteren Bereich des Schafts (12) montiertes Metallstück (72) gehen kann.

12. Blitzableiter nach einem der Ansprüche 1 bis 11, dadurch gekennzeichnet, daß er ein Hochspannungskabel (34) umfaßt, von dem sich wenigstens ein Teil im Innern des Schafts (12) befindet, wobei dieses Kabel einerseits mit dem Kristall (28) und andererseits mit der Elektrode (82) elektrisch verbunden ist.

13. Blitzableiter nach einem der Ansprüche 1 bis 12, dadurch gekennzeichnet, daß sich die Elektrode (82) im Innern eines Gehäuses (14) aus elektrisch leitfählgem Material befindet, dessen oberer Teil in einer Spitze endet und somit den Einschlagpunkt (84) bildet.

14. Blitzableiter nach Anspruch 13, dadurch gekennzeichnet, daß das Gehäuse (14) wenigstens eine Öffnung (86) in seinem unteren Teil und wenigstens eine Öffnung (88) in seinem oberen Teil aufweist.

## Claims

1. Lightning conductor comprising a substantially vertical pole (12), an intercepting point (84) located in the upper part of the pole (12) and electrically connected to the ground, at least one electrode (82) in the vicinity of the intercepting point (84), at least one piezoelectric crystal (28) electrically connected to said electrode (82) and means for compressing the piezoelectric crystal (28), characterized in that the compressing means comprise a fixed support (16) on which the pole (12) is mounted so as to be able to pivot about at least one horizontal axis, a bearing member (46) by means of which the pole (12) rests on the support (16), said bearing member (46) exerting a reaction force at least in certain pole (12) positions and means (48) for transmitting said reaction force to the crystal (28), the lightning oonductor also having means (52, 38) for limiting the pivoting movement of the pole (12).

2. Lightning conductor according to claim 1, characterized in that the bearing member is a convex member.

3. Lightning conductor according to claim 2, characterized in that the bearing member is a protuberance on the pole (12).

4. Lightning conductor according to claim 2, characterized in that the bearing member is a protuberance (66) provided on the fixed support (16).

5. Lightning conductor according to claim 2, characterized in that the bearing member is a ball (46) interposed between the pole and the fixed support (16).

6. Lightning conductor according to any one of the claims 1 to 5, characterized in that the bearing member is in direct contact with the crystal (28), which itself forms the reaction force transmission means.

7. Lightning conductor according to any one of the claims 1 to 5, characterized in that the means for transmitting the reaction force to the crystal (28) comprise a rigid part (48) in direct ccntact on the one hand with the bearing member (46) and on the other with the crystal (28).

8. Lightning conductor according to any one of the claims 1 to 7, characterized in that the crystal (28) is placed in the lower part of the pole (12).

9. Lightning conductor according to any one of the claims 1 to 8, characterized in that the means for limiting the pivoting movement of the pole (12) comprise a flange (38) forming part of the support (16) and having a lower face (42) serving as an abutment and a part (25) provided in the lower portion of the pole (12) and whereof at least one portion surrounds the collar (38), said part (25) having a shoulder (54) located at a distance d from the abutment (42) when the pole (12) is vertical and whereof at least one portion can come into contact with the abutment during the pivoting of the pole (12).

10. Lightning conductor according to claim 9, characterized in that the flange (38) is polygonal.

11. Lightning conductor according to claim 10, characterized in that the flange (38) has an upper face (40) with at least one hole (74), in which is introduced a pin (72) mounted in the lower part of the pole (12).

12. Lightning conductor according to any one of the claims 1 to 11, characterized in that it incorporates a high voltage cable (34), whereof at least part is located within the pole (12), said cable (34) being electrically connected on the one hand to the crystal (28) and on the other to the electrode (82).

13. Lightning conductor according to any one of the claims 1 to 12, characterized in that the electrode (82) is located within a box (14) made from a material which conducts electricity and whereof the upper part terminates in a point, thus forming the intercepting point (84).

14. Lightning conductor according to claim 13, characterized in that the box (14) has at least one orifice (86) in its lower part and at least one orifice (88) in its upper part.

FIG. 1

FIG. 5

FIG. 2

FIG. 6

FIG. 3a

FIG. 3b

FIG. 4